# EUROPEAN PATENT APPLICATION

(11) **EP 2 073 499 A1**
(43) Date of publication of application: **24.06.2009**
(21) Application number: 07024610.3
(22) Date of filing: 19.12.2007
(51) Int. Cl.: H04L 29/08, H04M 1/725

(54) **Community photo service on a data network**

(71) Applicant: Koninklijke KPN N.V., 2516 CK The Hague (NL)
(72) Inventor: van Steenbergen, Ate Sander, 9737 NN Groningen (NL)
(74) Representative: Wuyts, Koenraad Maria

(57) **Abstract**

A service is provided to a user of a mobile electronic device (102). The device (102) has an interface (107) to a data network (106), a component (114) for capturing information, and a user interface (116) for control of the device. The service configures the device for identifying a predetermined network address on the data network without user intervention and for automatically initiating setting-up a unidirectional data communicaton of the captured information to the predeternimed network address, all upon user actuation of an element in the user interface.

## Description

### FIELD OF THE INVENTION

The invention relates to a method of providing a service to a user of a mobile electronic device that has an interface to a data network, a capturing component for capturing information, such as a camera or microphone, and a user interface for user control of the device. The invention also relates to such a device, to electronic circuitry for use in such a device and to software for being instal led on such as device.

### BACKGROUND ART

US patent 7,016,478, incorporated herein by reference, discloses various embodiments of a 911 emergency voice/data telecommunication network. The 911 emergency voice/data telecommunication network includes: a caller device originating a 911 emergency call having a voice portion and a data portion. The caller device captures sound and image information from the vicinity of the caller device and communicates the captured sound and image information in the 911 emergency call. At least part of the captured sound and image information is communicated in the data portion of the 911 emergency call. The emergency voice/data network also comprises a local service interface in communication with the caller device and adapted to receive the 911 emergency call and separately route the voice portion and the data portion through the 911 emergency voice/data telecommunication network to an appropriate emergency service organization. The voice/data emergency network further comprises a public voice network in communication with the local service interface and adapted to receive the voice portion of the 911 emergency call from the local service interface, a public data network in communication with the local service interface and adapted to receive the data portion of the 911 emergency call from the local service interface, and an emergency services network in communication with the public voice network and the public data network and adapted to receive the voice portion of the 911 emergency call from the public voice network and the data portion of the 911 emergency call from the public data network. The emergency services network determines the appropriate emergency service organization to receive the 911 emergency call, communicates the appropriate emergency service organization for receiving the 911 emergency call to the local service interface via the public voice or other network interface, and dispatches the voice portion and data portion of the 911 emergency call to the appropriate emergency service organization.

The local service interface is in communication with the public voice network and initially sets up a voice channel for the 911 emergency call to the 911 voice/data network through the public network. The 911 operator may communicate with the 911 emergency caller via the voice channel in the same manner as in traditional 911 calls. The 911 voice data network communicates a static IP address to the local service interface for transmission of captured data from the caller device. The local service interface returns the IP address to the caller device in response to the 911 emergency call origination.

### SUMMARY OF THE INVENTION

The known network initially sets up a bi-directional voice channel for the 911 emergency call, either through a dedicated button on the caller device or via dialing, whereupon a static IP address is communicated via the voice data network for the transmission of captured data from the caller device. This known system has some drawbacks in operational use. For example, the caller is required to speak to the operator. The caller may not speak the language of the operator, or may be incapacitated to speak. Another disadvantage resides in the fact that the known system is not scalable. The known system can handle as many incoming calls as there are telephone lines and human operators available.

The invention, now, is based on the insight that the known system can be generalized so as to have a functionality that is useable for a wider range of applications than making emergency calls, and without adopting the drawbacks indicated above.

The inventor proposes a mobile electronic device comprising an interface to a data network; a capturing component, e.g., a camera or a microphone, for capturing information from the environment of the device; a user interface for control of the device; and a control component functionally connected to the user interface and configurable or re-configurable for a specific functionality. The functionality comprises identifying a predetermined network address on the data network without user intervention and for automatically initiating setting-up a unidirectional data communication of the captured information to the predetermined network address upon user actuation of an element in the user interface.

Note that the device of the invention is configured to upload captured information merely upon a simple user interaction with the device, namely actuation of an element of the user interface, e.g., a single hard button or a single soft key. The user does not have to enter or otherwise identify the predetermined network address. If the device has a touch-screen user interface and a hierarchical menu, e.g., a paged menu, that is accessible through the touch-screen, the single soft key is preferably accommodated at one of the top levels of the hierarchy for easy and fast access. Accordingly, an embodiment of the invention provides a device with a macro (i.e., a set of instructions) that is executed automatically upon a simple user actuation of a single element in the user interface. Preferably, the element is styled or designed to convey to the user the meaning of the element. As it is done in software, styling is particularly easy, in case of the element being a soft-key, or icon, in a touch screen graphical user interface.

The device of the invention minimizes user interaction in the process of submitting captured video or audio to a predetermined network address. For example, the user does not have to spend time needlessly in capturing information, then looking for the network address, programming the network address and starting the communication of the captured information to the network address. Note that especially on mobile devices the user interface is adapted to the device's form-factor. This means, among other things, that entering a string of characters (such as a network address) is rather cumbersome. The invention relates to a pre-configurabic device so as to optimize operational use of the device regarding the specific functionality. In addition, the invention supports the building of a network community on the data network and business models as is explained further below.

In an embodiment of the device of the invention, the control component is configurable to automatically capture the video information upon user actuation of the element. Accordingly, a single user interaction suffices to capture the information and have it communicated to the predetermined network address, thus minimizing the length of time that the user has to spend on the process.

In a further embodiment, the predetermined address depends on a geographic location of the device and/or the time of the day at the geographic location of the device. Using a mobile telephone, the caller's position can be determined relative to the base stations of the cellular network, and therefore geographically. Localization techniques, e.g., GSM localization, are well known. For example, if the user's mobile telephone number is submitted together with the captured video information, the user's location can be determined on the scale of the individual cells making up the cellular system As an alternative, the network address to which the picture or video is uploaded or streamed is made dependent on the geographic location of the device when uploading or streaming. For example, the predetermined network address is automatically supplied via the wireless network of the service provider under an OTA (over-the-air programming) mechanism dependent on the cell of the cellular network wherein the caller is located. The OTA mechanism covers methods of distributing software updates to mobile phones or configuring their settings for enabling access to certain services. As another example, the mobile phone is configured to store a list of network addresses from which the predetermined network address is selected based on the identity of the cell wherein the caller is located. If the device has a GPS receiver, the location of the device is matched with one (or more) of the addresses in the list to find one or more predetermined addresses. As yet a further alternative, the GPS receiver supplies geographic location data and the predetermined network address is created in a format that conveys the location, at least with some practical accuracy well lower than that of the GPS data. This requires that the usable predetermined network addresses be formatted to enable this option. Network addresses under IPv6 allow reservation of these predetermined addresses. As an alternative, the predetermined address is determined at the service provider. For example, the user's device is configured to send the captured information to a fixed network address of a server of the service provider. The service provider automatically identifies a location of the mobile device and forwards the captured information to the server of the operator responsible for the relevant geographic area.

In a further embodiment, the control component is configurable via a wireless data communication technology. The example using OTA has already been addressed above. Another example of such wireless data communication technology is a near-Held communication (NFC) technology. The NFC technology is discussed in detail further below with reference to example scenarios of using the device.

In an embodiment of the device, the predetermined network address is configurable or re-configurable. A configurable or re-configurable network address as destination for the captured information enables to associate different usage scenarios of the device to different network addresses. For example, when the user is present at a rock concert the invention enables him/her to upload captured video or captured audio information to a specific web site (if legally permitted) and when the user attends a sports event the invention enables to upload captured video or captured audio to another specific wcbsite. As a result, the user can participate and actively contribute to building communities on the data network such as the Internet. As an alternative, the user of the device may reserve a specific network address for personal use and have the device of the invention upload the captured information to this network address only in the user-friendly manner described above.

The inventor further proposes electronic circuitry for installing on a mobile electronic device, wherein the device comprises an interface to a data network, a capturing component for capturing information, and a user interface for control of the device. The circuitry is configurable for identifying a predetermined network address on the data network without user intervention and for automatically initiating setting-up a unidirectional data communication of the captured information to the predetermined network address upon user actuation of an element in the user interface. Such circuitry is relevant as, e.g., an after-market add-on or upgrade to mobile devices already in use, or for customizing mobile devices for e.g., particular geographic areas or time periods, etc., so as to have the device configured to conditionally provide the functionality of the invention, or for submitting the captured information to a personal network address, etc. In an embodiment, the predetermined network address is configurable or re-configurable, either by the user or by a service provider.

The inventor also proposes software for installing on a mobile electronic device, wherein the device comprises an interface to a data network, a capturing component for capturing information, and a user interface for control of the device. Upon installing, the software is operative to configure the device for identifying a predetermined network address on the data network without user intervention and for automatically initiating setting-up a unidirectional data communication of the captured information to the predetermined network address upon user actuation of an element in the user interface. In an embodiment, the predetermined network address is configurable. Mobile devices such as mobile telephones and personal digital assistants (PDA's) tend to become increasingly more sophisticated in terms of data processing power. For example video services and TV services are currently driving forward the third generation (3G) deployment. As these electronic devices have come to rely on data processing and the necessary hardware and software, functionalities of the device can be changed or added through changing or installing the software through, e.g., standard interfaces and procedures. Accordingly, the invention can also be commercially exploited as software for being downloaded, or otherwise provided, to electronic mobile devices.

The inventor further proposes a method of providing a service to a user of a mobile electronic device, e.g., a mobile telephone, a personal digital assistant (PDA) or palmtop computer, etc. The device has an interface to a data network, a component for capturing information, e.g., a camera or a microphone, from the environment of the device, and a user interface for control of the device. The method comprises configuring the device or enabling the user to configure the device, e.g., by means of supplying control data, for a specific functionality. The functionality comprises identifying a predetermined network address on the data network without user intervention and for automatically initiating setting-up a unidirectional data communication of the captured information, e.g., via Multimedia Messaging Service (MMS), HyperText Transfer Protocol (http), File Transfer Protocol (FTP), etc., to the predetermined network address upon user actuation of an element in the user interface.

The invention thus enables a user-friendly process for submitting the captured information via the data network. The device is configured or re-configured in the invention to upload captured video information or audio information merely upon a simple user interaction with the device, e.g., actuation of a single element in the user interface, e.g., a single hard button or a single soft-key. If the device has a touch-screen user interface and a hierarchical menu, e.g., a paged menu that is accessible through the touch-screen, the single soft-key is preferably accommodated at one of the top levels of the hierarchy for easy and fast access. The configuration or re-configuration introduces a degree of flexibility and control over the scalability, e.g., regarding the number of users per predetermined network address on the part of the service provider, and enables different usage scenarios on the part of the user of the device.

In order to be perceived as non-intrusive, the service preferably makes the functionality available to the user only if one or more predetermined conditions are met, e.g., if and when the user has explicitly agreed to configure or re-configure his/her device for this specific functionality. Other conditions are discussed below. Now consider the possibilities of the invention as discussed with reference to the following example scenarios.

A service provider or another party creates a community site on the Internet for an audience interested in a specific event, topic or locale. For example, the community site gathers and/or provides content information about a certain locale, e.g., a zoo, a national park, a sports event, a city, a country or county, an amusement park or a theme park, a fair or exposition, a museum, carnival or mardi gras, a performance, etc. When a user of the mobile device arrives at the locale, he/she is automatically sent a message (e.g., SMS) requesting the user to participate in contributing to the community site. If the user agrees to participate, he/she replies by sending a reply message, in response to which the device receives a predetermined network address for uploading the captured information. The user could then manually configure the device to have the automatic initiation of the submission of captured information send to that address. Alternatively, the control data and the predetermined network address for implementing this functionality is received in response to the reply message and automatically installed at the device.

In an embodiment, the method of the invention comprises: receiving from the user an identifier of the device; identifying the device; and using the identifier for remotely configuring the device. For example, the user has registered in advance with the service provider or with another party, e.g., in response to an advertisement in a newspaper or magazine, an advertisement on TV, or on the radio or on the Web, etc. At registering, the user is requested to participate and if so, to give his/her mobile telephone number or other identifier of the mobile device. In return to the user having given the identifier, the control data and predetermined address are sent to the device thus identified for being automatically installed, e.g., using OTA technology discussed above.

In an embodiment, the method of the invention comprises automatically carrying out the configuring through transfer of data to the device using a wireless data communication technology if the device is within range of a source of the data. For example, the user pays an entrance fee at the locale using his/her mobile telephone, e.g., through near-field communication (NFC) or another wireless or contactless technology such as Bluetooth and Wi-Fi. As known, NFC technology is currently mainly aimed at mobile telephones. An existing application is that the NFC component onboard the mobile telephone behaves as an existing wireless electronic card (e.g., the expression "mobile payment" has already been in use to refer to the mobile telephone acting as a debit/credit card). Another existing application is to use the NFC component as a reader for reading a passive radio-frequency identification (RFID) tag, e.g., to upload data or software instruction code. Yet another application is to have two N FC components, each in a different mobile telephone, exchange information. Accordingly, using the NFC component of the mobile telephone enables to pay the entrance fee and to communicate the telephone's call number, so that the service provider or another party can send an SMS message to this user if and when relevant, e.g., to communicate the predetermined network address or the control code to implement aforesaid functionality with minimum user intervention. Or, using the NFC component enables to pay the entrance fee, and to upload control code to the mobile device for implementing aforesaid specific functionality through software. Or, the NFC component enables to pay the entrance fee, and to obtain an access code for accessing the community site via the data network from the mobile device. Various other combinations of these options, whether or not implemented using NFC technology, are possible in order to get the user involved in interacting with the community site.

The service provider operating the community website may negotiate with the network operator a reduced fee, charged to the participating users of the mobile devices, for uploading the captured information. A fee reduction will attract more participants and thus boost the number of uploads.

Preferably, a participating user registers with his/her identifier, name or nickname that gets published on the community website as associated with the uploaded captured information. In this manner, the user can actually manifest himself/herself on the community website, and viewers logging in on the community website can search for captured information uploaded by specific users. Frequent users who upload captured information to various community websitcs thus establish their reputation and may be charged a reduced fee per upload based on their popularity in terms of a number of times that his/her uploaded information has actually been accessed via the community web site. The service provider could also make it a contest with regard to whose uploads per event were the most popular in terms of frequency of access via the community site, and provide a reduction of the upload fees or another prize or compensation.

Another scenario that is enabled by the invention is the upload of captured information to a news-gathering service, e.g., for a town or city, a county, a country, or even world-wide. The users then upload their captured information to a predetermined network address, where the information is sorted on the basis of, e.g., time of arrival, geographic location of the uploading device (determined via, e.g., GPS and uploaded together with the captured information, or via the cellular infrastructure of the telephone network in the case of mobile telephones). For example, users may subscribe to a news-gathering service and receive configuration data for their mobile electronic devices so as to facilitate the uploading of captured information as discussed above. The news editing staff of the service thus receives captured information about events or locales that are going to be covered by professional journalists in response to receiving the captured information, or that are already being covered by professional journalists. The mobile electronic device comprises, e.g., a mobile telephone. Note that mobile phones have grown to become a commodity, and that the majority of mobile telephones currently marketed have an onboard digital camera for capturing video. From the point of view of the editor at a news-gathering service, an event occurring in public and drawing attention may trigger dozens of bystanders at different positions to upload or stream one or more pictures or motion video to the dedicated website on the network. The editor thus can get a better overview of what is happening or has happened, and respond accordingly. In this manner, the invention enables a collaborative community news gathering service based on contributions of users of mobile electronic devices and accessible to viewers via a data network.

Yet another scenario that is enabled by the invention is providing a service to an audience based on contributions received from users of mobile electronic devices uploading captured information to a predetermined network address. The service manages the uploaded captured information, e.g., by editing, sorting, filtering, converting the electronic format, etc., and makes the uploaded captured information available, e.g., via the data network to browsing clients, or via a television network to subscribers. For example, a television channel is reserved for a slide show with pictures uploaded by users of mobile telephones attending an event, e.g., the Pinkpop festival (rock festival held near the town of Landgraaf, the Netherlands). Alternatively, or in addition, the service creates respective slide shows tailored to the desires of respective parties, e.g., for use as an advertising feature or attention drawing feature on a web site. Within this context, note that a webpage can be organized into so-called frames, each of which displays a different electronic document. A frame can be used to provide a slide show. In this manner, a party can draw the public's attention to their website by including a frame for the slide show that has been created according to specific requirements, determined by the party, and therefore in a unique manner. The service provider selects from among the uploaded captured information those items that comply with criterions determined by the party in order to implement the slide show. For example, the brewer of a particular brand of beer provided at the Pinkpop event could request the service provider to select those uploaded pictures that show, e.g., a billboard at the event with the beer's advertisement, people attending the event and clearly having a way too good time at the event owing to the beer, performers relaxing with a proper glass of the proper beer, etc. Alternatively, the frame of the slide show can be used as an advertisement and added to a more general website, e.g., a portal for a web community, etc. In this manner, the coverage of the event by the users of mobile electronic devices can be used as a vehicle for advertisement to a targeted audience.

Above scenarios are examples of an embodiment of the method of the invention that further comprises providing the service to another user of another mobile electronic device, the other device having another interface to the data network, another component for capturing other information, and another user interface for control of the other device. The method comprises configuring the other device for identifying the predetermined network address on the data network without user intervention and for automatically initiating setting-up another unidirectional data communication of the captured other information to the predetermined network address upon user actuation of another element in the other user interface. Herein, multiple users use the same predetermined network address for uploading their captured information.

As an alternative, the invention provides another embodiment of the method, comprising providing the service to another user of another mobile electronic device, the other device having another interface to the data network, another component for capturing other information, and another user interface for control of the other device. The method comprises configuring the other device for identifying another predetermined network address on the data network without user intervention and for automatically initiating setting-up another unidirectional data communication of the captured other information to the other predetermined network address upon user actuation of another element in the other user interface.

For example, a user of a mobile electronic device leases or otherwise obtains a personal network address for a webpage with the service provider for rendering the captured information uploaded by this particular user. The webpage or website may or may not be accessible to the public and is under password protection. The uploading itself is facilitated owing to the invention's configuring of the device. People are allowed access to the webpage can share the user's experience and witness the development of this user's experience, practically in real-time, in the form of the uploaded information captured by this user's device.

In a further embodiment, the configuring comprises configuring the device for a predetermined period of time and/or the configuring comprises configuring the device only if the device is located within a predetermined geographic area. In this manner, the configured functionality of the device is restricted and the user does not have to feel trapped.

Within the context of the invention, the term "video" is being used to cover an individual still frame picture, or a sequence of still frame pictures or motion video, or a combination thereof or a combination thereof with audio so as to have a full multimedia item. The mobile device enables to communicate captured video, either as an upload or as streaming content, to one or more predetermined network addresses just upon a simple actuation, e.g., a dedicated button on the device's user interface.

Within the context of the invention, the expression "unidirectional data communication" refers to the transport of the video information itself from the mobile device to the destination with the predetermined network address. At the protocol level, the communication in a client-server architecture may involve bi-directionality in order to establish the interconnection.

Note that the methods of the invention are scalable whereas the known method discussed in US patent 7,016,478 is not. The known system can handle as many incoming calls as there are telephone lines and human operators available, whereas in the invention is based on data packets and data network communication protocols. The invention thus enables reception of captured information from a number of sources many orders of magnitude larger than in the known system.

The invention facilitates implementing a collaborative environment on the data network based on the people carrying network-enabled devices with them such as mobile phones, and on the Internet's infrastructure. Within this context, reference is made to US patent application publication US 20030032448, incorporated herein by reference. The publication discloses a consumer electronics device, such as a cell phone, digital camera or tracking device, that is designed to record real time audio and/or video as well as location based information. The recording can be remotely monitored and stored for the purpose of creating a personal logbook or for the purpose of tracking a person or object on the move.

### BRIEF DESCRIPTION OF THE DRAWING

The invention is explained in further detail, by way of example and with reference to the accompanying drawing, wherein:

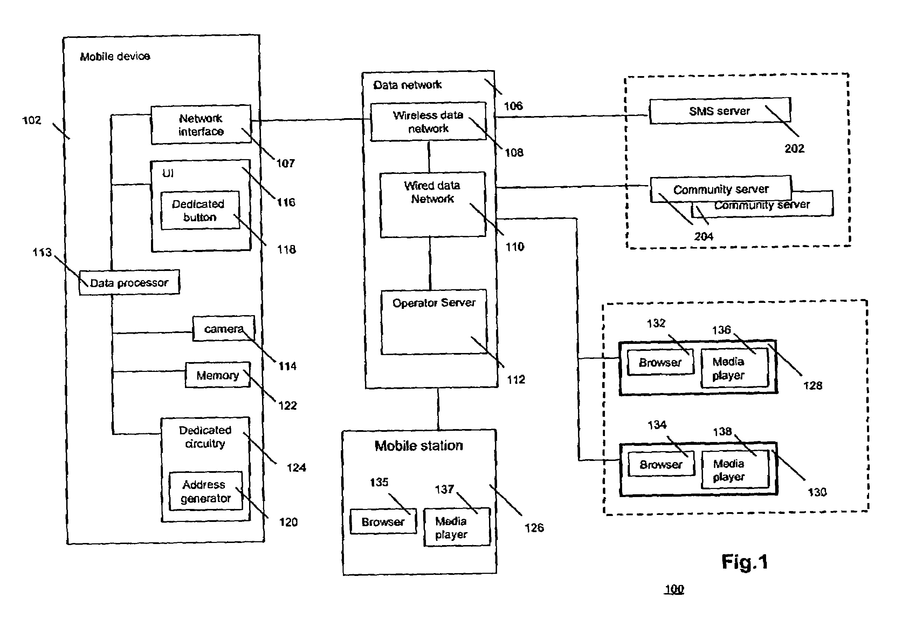

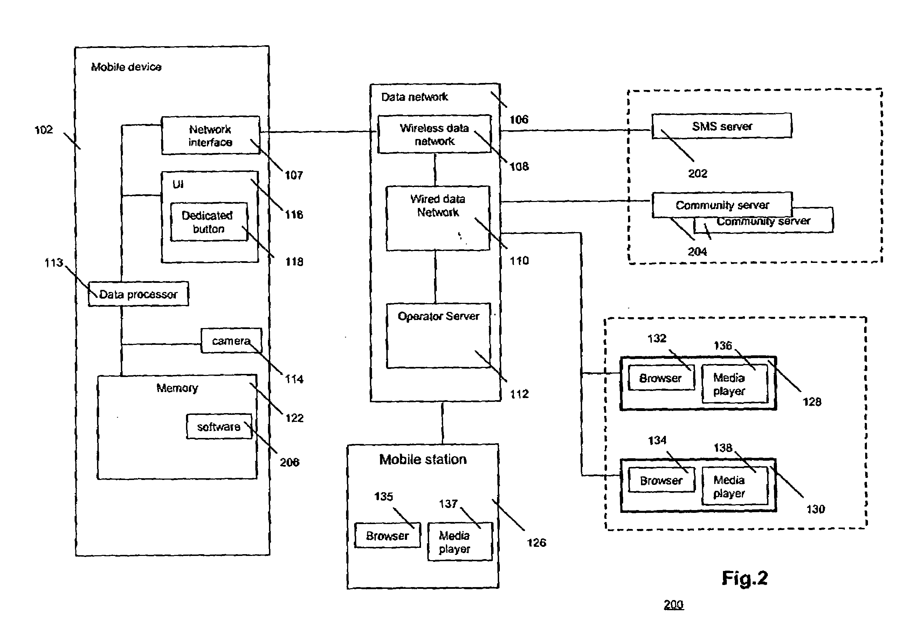

Figs.1 and 2 are block diagram of a system in the invention;

Throughout the Figures, similar or corresponding features are indicated by same reference numerals.

### DETAILED EMBODIMENTS

Fig.1 is a block diagram of a system 100 in the invention. System 100 comprises a mobile electronic device 102, e.g., a mobile telephone, that communicates with one or more servers 204 via a data network 106 and a network interface 107. Network 106 comprises, e.g., a wireless network 108 and a wired network 110. Network 106 is operated by a service provider (e.g., network operator) through a server 112. Device 100 comprises a microcontroller or data processor 113. Device 100 comprises a camera 114 for capturing video information in the form of, e.g., a still picture, a sequence of still pictures or full motion video. Camera 114 is controlled by the user of device 102 via a user interface (UI) 116. UI 116 comprises a dedicated input element 118 that serves to initiate the process of automatically uploading or automatically streaming the information captured by camera 114 upon user actuation with element 118. Element 118 comprises, e.g., a (hard or soft) key, or a combination of keys on the keyboard (not shown) of device 102 to be pressed by the user to activate the uploading or streaming. Alternatively, UI 116 comprises a graphical user interface (GUI), and element 118 is a menu option that is selectable via this GUI. Alternatively, element 118 is a voice activated input responding to a certain sound or combination of sounds, or is an input that responds to the user touching multiple times in rapid succession, etc.

In the invention, device 102 is configured to automatically select, or otherwise generate, a network address of server 204 upon actuation of element. 118. The address selection or generation is carried out by an address generator 120 activated automatically upon the user's triggering element 118. Examples of address selection or generation have been given above.

In another embodiment of the invention, device 102 is configured to upload or stream the captured information to a server at a fixed address, e.g., server 112. Server 112 determines a location or geographical area from which device 102 is transmitting, and also the predetermined network address of one or more specific ones of servers 204. Server 112 then forwards the captured information to this server 204.

In a further embodiment of the invention, server 112 adds a time stamp to the captured information to be forwarded to one or more servers 204 and/or an identification of device 102 from which the captured information was receive.

In a still further embodiment, server 112 and/or servers 204 are preferably configured to cluster the captured information according to time of receipt and/or geographic location, so as to group the captured information received per individual event for being rendered to an audience in a more or less consistent or logic manner. The clustering is a result of processing the time stamp and identifications of the geographic locations. This clustering can be ongoing so as to enable the audience to track the evolution of the event being covered by the captured information received.

The operator of one or more of servers 204 may also route the incoming video information to a mobile station 126, e.g., of a subscribers to the receiving the information uploaded by users of other mobile stations or devices and compiled by the operator. Alternatively, the users of mobile stations such as station 126 may log in on server 104 on their own initiative to retrieve the video information. Mobile station 126 has a browser 135 and a media player 137 so as to implement this functionality.

In a further embodiment of the invention, system 100 also comprises one or more data processing apparatus 128 and 130, each provided with a browser 132, 134 and a media player 136, 138. In this manner interested parties to whom the events captured are relevant can log in on either operator server 112 or one or more of servers 204 to witness the events captured.

Device 102 is configured to start the automatic data communication to server 104 (directly or indirectly via server 112) upon actuation of element 118. In a further embodiment of the invention, actuation of element 118 also activates camera 114 so that the user should have the camera pointed to the intended scene of the event when actuating element 118. Alternatively, actuating element 118 causes device 102 to transmit the data that was captured most recently by camera 114 and stored in a memory 122.

Device 102 is configured, e.g., by the service provider and/or by the supplier (e.g., manufacturer). Optionally, device 102 is configured to submit the captured information so that its authenticity can be verified upon receipt. This then prevents, e.g., pranksters and people with the ill intention to divert attention, from abusing the emergency system. For example, a picture captured at an event in the past and sent to the services with a current time stamp could lead to unnecessary alerts. One way of avoiding this is automatically digitally watermarking the captured information at device 102 with a time stamp and/ or identification of device 102 using tamper-resistant, dedicated data processing electronic circuitry 124 onboard of device 102. The time stamp is created using, e.g., an internal clock. Watermarking is a known data processing technique for ensuring data integrity.

Preferably, circuitry 124 implements the function of triggering camera 114 (or selecting the video information most recently stored in memory 122) and submitting the video information to a predetermined address upon user actuation of element 118 as discussed above. Circuitry 124 is, for example, commercially made available as an after-market add-on for being installed on a device, such as a mobile telephone, that is already in use.

In an embodiment of the invention, camera 114 comprises a wide-angle lens (or fisheye lens) for capturing a wide (or hemispherical) image so as to provide as much context as possible for the emergency operator.

In still a further embodiment of a system 100 of the invention, the predetermined address to which device 102 submits the captured video information is the address of server 112. Server 112 posts the video information, preferably organized according to geographic location and time. Operators of servers 204, as well as users of apparatus 128, 130 and of mobile station 126 can log in on server 112 to watch the video information, e.g., upon receipt of a notification through another communication channel such as telephone or SMS or can selectively forward the captured information to one or more of servers 204.

Consider an event, such as a soccer match, a motor race or a publicly accessible concert, that is attended by a large audience. If members of the audience are allowed to take pictures via their network-enabled cameras 114, an infrastructure similar to the ones discussed above can be used to accumulate video information. Each item of video information is characterized by, e.g., a time stamp and a geographic location. A community web-service has a predetermined network address, e.g., valid only during the event, to which the items are being submitted via the data network and in real time. The service then organizes the items so as to provide an overview of the evolution of the event, automatically or under supervision of an editor, to members of the community who have access via apparatus 128 and 130.
An example scenario is the following. A party has created a community web service that accumulates video information uploaded by members of the audience, present at the event, via their devices 102. The event takes place in a certain time slot. The audience members having a device 102 receive an SMS or email or another notification requesting them to participate in the community web service. For example, the party broadcasts via newspaper or magazine, or via TV or radio, or via a website dedicated to the upcoming event, that participants can upload their pictures taken at the event to a predetermined network address during the event. Alternatively, the party operates a server 202, e.g., an SMS server or email server, that sends an electronic message to the audience at the event, requesting the users of devices 102 receiving the message to participate in the community web service. If the user accepts the request, e.g., by sending an "OK" to SMS number "8400" or by hitting a reply button, server 202 sends a data SMS or a data email to the device 102 of the user for configuring the setting of device 102 for the duration of the event. That is, the configuration induced is preferably temporary. The configuring of the settings can be done via an OTA mechanism. The setting is then such that user actuation of dedicated user input element 118 automatically identifies the predetermined network address of server 204 without further user intervention and automatically initiates setting-up a unidirectional data communication of the captured information to the predetermined network address upon user actuation of element 118.

Server 204 is operative to organize the received video information on their web page, e.g., by showing only the most recently received video information in a part of the web page. This information gets overwritten continually. Previously received video information can be made accessible through scrollable, or otherwise navigable, thumbnails in another part of the page rendered in browsers 132 and 134. If the event covers a large enough geographic area, e.g. a soccer match or a motor race, server 204 organizes the video information according to most-recently received and/or according to location within the geographic area, so as to show the event from different vantage points, etc.

Preferably, the user can disable this configuration when and if so desired, e.g., through a dedicated user interaction via UI 116, e.g., through a menu selection of configuration options of device 102.

Fig.2 is a diagram of an embodiment of a system 200 in the invention. In system 100, the functionality as proposed in the invention, is implemented using dedicated hardware such as circuitry 124. In system 200, this functionality is implemented by a software module 206 installed on device 102 and stored in memory 122. Software module 206 configures device 102 to automatically identify the predetermined network address of server 204 and to automatically initiate setting-up a unidirectional data communication of the captured information to the predetermined address upon a user actuation with user interface 116, e.g., through element 118. For example, software module 2046 is downloaded via data network 106 from a software provider, or from another source, via interface 107 or another interface (not shown) of device 102. Preferably, the user of device 102 can disable and enable the functionality provided by software module 206, for example in order to prevent that video data is inadvertently submitted to the emergency authorities. Enabling and disabling then requires some dedicated user interaction via UI 116, e.g., through a menu selection of configuration options of device 102.

Each respective one of the appended claims explicitly covers a respective combination of features. The invention also covers patentable, combinations of features distributed among different claims.

## Claims

1. A mobile electronic device comprising:
an interface to a data network;
a capturing component for capturing information;
a user interface for control of the device;
a control component functionally connected to the user interface and configurable for identifying a predetermined network address on the data network without user intervention and for automatically initiating setting-up a unidirectional data communication of the captured information to the predetermined network address upon user actuation of an element in the user interface.

2. The device of claim 1, wherein the control component is configurable to automatically capture the video information upon user actuation of the element.

3. The mobile device of claim 1, comprising a mobile telephone.

4. The device of claim 1, wherein the predetermined address depends on at least one of a geographic location of the device and a time of the day.

5. The device of claim 1, wherein the control component is configurable via a wireless data communication technology.

6. The device of claim 5, wherein the wireless data communication technology comprises at least one of a near-field communication technology, Bluetooth and Wi-Fi.

7. The device of claim 1, wherein the predetermined network address is configurable.

8. Electronic circuitry for installing on a mobile electronic device, wherein the device comprises an interface to a data network, a capturing component for capturing information, and a user interface for control of the device, and wherein the circuitry is configurable for identifying a predetermined network address on the data network without user intervention and for automatically initiating setting-up a unidirectional data communication of the captured information to the predetermined network address upon user actuation of an element in the user interface.

9. The circuitry of claim 8, wherein the predetermined network address is configurable.

10. Software for installing on a mobile electronic device, wherein the device comprises an interface to a data network, a capturing component for capturing information, and a user interface for control of the device, wherein the software is operative to configure the device for identifying a predetermined network address on the data network without user intervention and for automatically initiating setting-up a unidirectional data communication of the captured information to the predetermined network address upon user actuation of an element in the user interface.

11. The software of claim 10, wherein the predetermined network address is configurable.

12. A method of providing a service to a user of a mobile electronic device, the device having an interface to a data network, a component for capturing information, and a user interface for control of the device, the method comprising:
configuring the device for identifying a predetermined network address on the data network without user intervention and for automatically initiating setting-up a unidirectional data communication of the captured information to the predetermined network address upon user actuation of an clement in the user interface.

13. The method of claim 12, comprising:
sending via the data network a request to the device for the user to accept the configuring;
upon receiving via the data network a confirmation from the user accepting the configuring, remotely configuring the device.

14. The method of claim 12, comprising:
receiving from the user an identifier of the device;
identifying the device; and
using the identifier for remotely configuring the device.

15. The method of claim 12, comprising automatically carrying out the configuring through transfer of data to the device using a wireless data communication technology if the device is within range of a source of the data.

16. The method of claim 15, wherein the wireless communication technology comprises at least one of a near-field communication technology, B luetooth and Wi-Fi.

17. The method of claim 12, wherein the configuring comprises configuring the device for operational use for a predetermined period of time.

18. The method of claim 12, wherein the configuring comprises configuring the device for operational use only within a predetermined geographic area.

19. The method of claim 12, comprising providing the service to another user of another mobile electronic device, the other device having another interface to the data network, another component for capturing other information, and another user interface for control of the other device, the method comprising:
configuring the other device for identifying the predetermined network address on the data network without user intervention and for automatically initiating setting-up another unidirectional data communication of the captured other information to the predetermined network address upon user actuation of another element in the other user interface.

20. The method of claim 12, comprising providing the service to another user of another mobile electronic device, the other device having another interface to the data network, another component for capturing other information, and another user interface for control of the other device, the method comprising:
configuring the other device for identifying another predetermined network address on the data network without user intervention and for automatically initiating setting-up another unidirectional data communication of the captured other information to the other predetermined network address upon user actuation of another element in the other user interface.
